# EUROPEAN PATENT APPLICATION

(11) **EP 4 822 955 A1**
(43) Date of publication of application: **14.10.2026**
(21) Application number: 26153704.7
(22) Date of filing: 23.01.2026
(51) Int. Cl.: H02K 5/08, H02K 5/22, H02K 7/14, H02K 11/40, H02K 15/142, H02K 1/14

(54) **STATOR UNIT, METHOD FOR MANUFACTURING STATOR UNIT, AND ELECTRIC VALVE**

(30) Priority: 11.04.2025 JP 2025065552
(71) Applicant: Fujikoki Corporation, Tokyo 158-0082 (JP)
(72) Inventor: Hayakawa, Junya, Setagaya-ku, Tokyo, 1580082 (JP); Matsubara, Yuta, Setagaya-ku, Tokyo, 1580082 (JP)
(74) Representative: Grünecker Patent- und Rechtsanwälte PartG mbB

(57) **Abstract**

A stator unit 100 includes a stator main body 10 and an attachment part 50 that attaches the stator main body 10 to an electric valve main body. The stator main body 10 includes an inner mold portion including a stator assembly having a stator yoke and a stator coil, and an outer mold portion covering the inner mold portion. The outer mold portion covers a portion of the attachment part 50.

## Description

### TECHNICAL FIELD

The present disclosure relates to a stator unit, a method for manufacturing a stator unit, and an electric valve.

### BACKGROUND ART

A method for manufacturing a stator unit is known, which includes performing inner molding on a stator assembly in which a bobbin around which a stator coil is wound is assembled to a stator yoke and a power supply terminal for supplying power to the bobbin, and performing outer molding after the inner molding so as to cover an outer circumferential portion of an inner mold portion (for example, Patent Literature 1).

### CITATION LIST

### PATENT LITERATURE

Patent Literature 1: JP 2018-164398 A

### SUMMARY OF INVENTION

### TECHNICAL PROBLEM

As a configuration for assembling a stator main body to a valve main body after inner molding and outer molding, a structure is known in which an attachment plate fixed on the stator main body side is fixed on the valve main body side by screwing, resin welding, or the like.

However, in screwing or resin welding via the attachment plate, there is a problem in that it is necessary to provide the stator main body with a screw receiving portion, a welding portion, or the like, and that the stator main body increases in size in order to secure sufficient fixing strength.

An object of the present disclosure is to provide a stator unit having high fixing strength, a method for manufacturing a stator unit having high fixing strength, and an electric valve having high fixing strength.

### SOLUTION TO PROBLEM

A stator unit according to an aspect of the present disclosure is
a stator unit including a stator main body and an attachment part configured to attach the stator main body to an electric valve main body,
wherein the stator main body comprises:
   an inner mold portion including a stator assembly having a stator yoke and a stator coil; and
   an outer mold portion covering the inner mold portion, and
   wherein the outer mold portion covers a portion of the attachment part.

A method for manufacturing a stator unit according to an aspect of the present disclosure is
a method for manufacturing a stator unit including a stator main body having a stator assembly including a stator yoke and a stator coil, and an attachment part configured to attach the stator main body to an electric valve main body, the method comprising:
an inner molding step of molding an internal region of the stator assembly, thereby forming an inner mold portion including the stator assembly; and
an outer molding step of, after the inner molding step, performing molding so as to cover the inner mold portion and a portion of the attachment part, thereby forming an outer mold portion,
wherein the stator main body including the inner mold portion and the outer mold portion is formed by the outer molding step.

An electric valve according to an aspect of the present disclosure is
an electric valve including a stator main body, an electric valve main body, and an attachment part configured to attach the stator main body to the electric valve main body,
wherein the stator main body comprises:
an inner mold portion including a stator assembly having a stator yoke and a stator coil; and
an outer mold portion covering the inner mold portion and at least a portion of the attachment part,
wherein the electric valve main body includes an engaged portion, and
wherein the attachment part includes an engaging portion configured to engage with the engaged portion.

### ADVANTAGEOUS EFFECTS OF INVENTION

According to the present disclosure, a stator unit having high fixing strength, a method for manufacturing a stator unit having high fixing strength, and an electric valve having high fixing strength can be provided.

### BRIEF DESCRIPTION OF DRAWINGS

Fig. 1 is a perspective view of a stator unit according to a first embodiment of the present disclosure.
Fig. 2 is a cross-sectional view of an electric valve according to the first embodiment of the present disclosure.
Fig. 3 is a cross-sectional view of an electric valve according to a second embodiment of the present disclosure.
Fig. 4 is a schematic diagram illustrating a positional relationship between a contact portion and a power supply terminal of the electric valve according to the second embodiment of the present disclosure.
Fig. 5 is a perspective view of an attachment part according to a third embodiment of the present disclosure.
Fig. 6 is a perspective view of an attachment part according to a fourth embodiment of the present disclosure.
Fig. 7 is a perspective view illustrating a state in which a stator unit before outer molding according to an embodiment of the present disclosure is mounted to a mold for molding.

### DESCRIPTION OF EMBODIMENTS

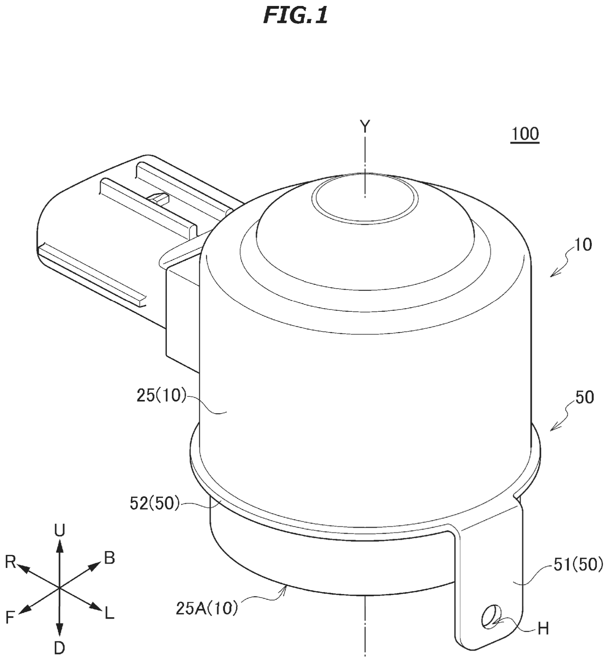

Hereinafter, embodiments of the present invention will be described with reference to the drawings. Note that for components having the same reference signs as those already described with respect to the embodiments, the description thereof is omitted for convenience of explanation. In addition, for convenience of description, the dimension of each member illustrated in the drawings may be different from the dimension of each actual member. Note that, in the following description of the embodiments, upward, downward, leftward, rightward, forward, and rearward directions indicate directions in the planes of Figs. 1 to 7, and are respectively denoted by U, D, L, R, F, and B. However, the technical scope of the present disclosure shall not be construed as being limited thereby.

### <Stator Unit and Electric Valve>

### <First Embodiment>

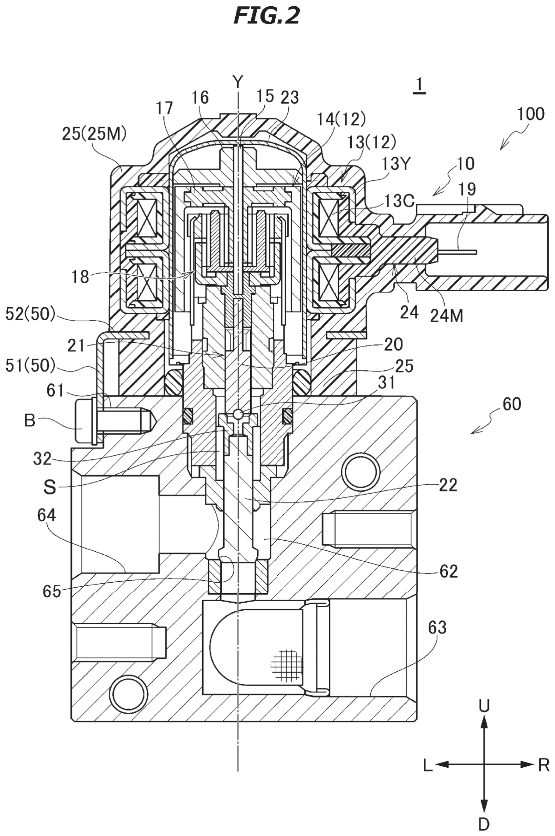

Fig. 1 is a perspective view of a stator unit 100 according to a first embodiment of the present disclosure. Fig. 2 is a cross-sectional view of an electric valve 1 according to the first embodiment of the present disclosure, and illustrates a state in which the stator unit 100 illustrated in Fig. 1 is assembled to a valve main body 60 (also referred to as an electric valve main body). Note that Fig. 2 illustrates a closed state of a valve body 22.

As illustrated in Fig. 1, the stator unit 100 includes a stator main body 10 and an attachment part 50. The stator main body 10 is a cylindrical member and has a circular bottom surface 25A. The attachment part 50 is, for example, a metal member and includes a base portion 52 and an engaging portion 51. As illustrated in Fig. 2, the attachment part 50 allows the stator main body 10 to be attached to the valve main body 60 via the engaging portion 51.

The base portion 52 has, for example, a ring shape, and a part of the base portion 52 is incorporated into the stator main body 10, and thus the stator main body 10 and the attachment part 50 are integrated. An outer diameter of base portion 52 is larger than a diameter of the bottom surface 25A. The engaging portion 51 is a plate-like member extending in a direction of a central axis Y, and is provided in a cantilevered manner on an outer side of the base portion 52. The engaging portion 51 has a fixing hole H, and is fixed to a groove-like engaged portion 61 of the valve main body 60 by passing a screw B through the fixing hole H (see Fig. 2).

As illustrated in Fig. 2, the stator main body 10 includes an outer mold portion 25, and within the outer mold portion 25, an inner mold portion 24, a rotor 14, a valve shaft 15, a support member 16, a rotor support portion 17, a planetary gear mechanism 18, a screw driving member 20, and a can 23 are provided.

The inner mold portion 24 includes a stator assembly 13 and a power supply terminal 19. The stator assembly 13 includes a plurality of stator yokes 13Y and a stator coil 13C arranged inside each stator yoke 13Y. The inner mold portion 24 is a portion in which an internal region of the stator assembly 13 and a portion of the power supply terminal 19 are molded with a first mold resin 24M and integrated. The inner mold portion 24 and the can 23 are covered by the outer mold portion 25 made of a second mold resin 25M. In addition, a part of the base portion 52 of the attachment part 50 is covered by the outer mold portion 25. That is, the stator main body 10 and the attachment part 50 are integrated, and thus the fixing strength of the attachment part 50 can be increased. Note that the first mold resin 24M and the second mold resin 25M may be the same resin material or different resin materials.

The stator assembly 13 and the rotor 14 constitute a motor 12. The motor 12 is, for example, a stepping motor. The rotor 14 is rotatably arranged inside the stator assembly 13. The valve shaft 15 is connected to the rotor 14 and is arranged inside the rotor 14. The support member 16 supports an upper end of the valve shaft 15. By causing a drive current to flow through the stator coils 13C via the power supply terminal 19 from a control board (not illustrated), the rotor 14 is rotationally controlled about the central axis Y. Rotational force of the rotor 14 is transmitted to the planetary gear mechanism 18 via the rotor support portion 17. The rotor 14, the valve shaft 15, the support member 16, the rotor support portion 17, and the planetary gear mechanism 18 are arranged inside the can 23.

The planetary gear mechanism 18 is a reduction mechanism that reduces rotational speed of the rotor 14 and transmits rotational force to a screw driving member 20 located below the planetary gear mechanism 18. The planetary gear mechanism 18 is composed of, for example, a fixed ring gear, a sun gear, a plurality of planetary gears, a carrier, an output gear, an output shaft, and the like. In the present embodiment, the rotor support portion 17 is integrally provided with the sun gear.

The screw driving member 20 is linearly driven in the direction of the central axis Y by a transmission mechanism 21 using the rotational force transmitted from the planetary gear mechanism 18 as a power source. The valve body 22 is connected to a lower end portion of the screw driving member 20. The linear driving of the screw driving member 20 is transmitted to the valve body 22 via a ball-shaped joint 31 and a spring receiving member 32.

The valve main body 60 includes therein a valve chamber 62, an inlet passage 63 that allows a fluid to flow into the valve chamber 62, and an outlet passage 64 that allows the fluid to flow out. A valve seat 65 is formed at an upper end portion of an opening portion of the inlet passage 63 into the valve chamber 62.

The valve body 22 is driven in the direction of the central axis Y, thereby being seated on or separated from the valve seat 65 to open and close the outlet passage 64. Therefore, the fluid flowing in from the inlet passage 63 flows out to the outlet passage 64 via the valve chamber 62 when the valve body 22 is in an open state, and remains in the valve chamber 62 without flowing out to the outlet passage 64 when the valve body 22 is in a closed state. A compression coil spring S is provided below the spring receiving member 32, and by applying an urging force to the valve body 22, the valve body 22 can reliably transition to an open state during a valve opening operation.

### <Second Embodiment>

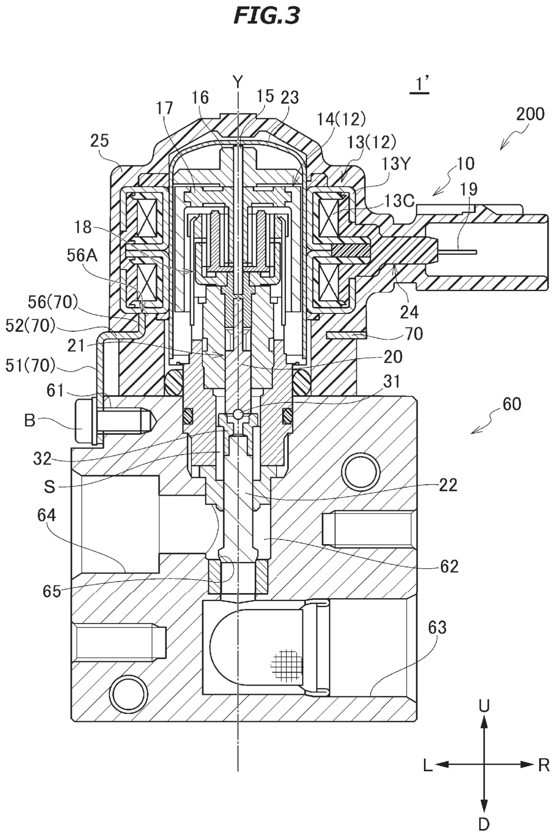

Fig. 3 is a cross-sectional view of an electric valve 1' according to a second embodiment of the present disclosure. An attachment part 70 in a stator unit 200 of the electric valve 1' according to the second embodiment is provided with a contact portion 56. The contact portion 56 is provided in a cantilevered manner on at least a portion of an inner circumference of the base portion 52 of the attachment part 70, for example, and is in contact with the stator yoke 13Y. Additionally, the attachment part 70 and the stator yoke 13Y are electrically conductive. Accordingly, the stator yoke 13Y and the attachment part 70 are electrically connected to each other by being in contact with each other. Additionally, the attachment part 70 is electrically connected to a ground region of the valve main body 60 via the engaging portion 51 and the screw B.

In this manner, the attachment part 70 is provided with the contact portion 56 in contact with the stator yoke 13Y, such that the stator yoke 13Y and the attachment part 70 are electrically connected, and the stator yoke 13Y can be easily grounded. Accordingly, noise superimposed on a drive current of the stator coil 13C can be reduced.

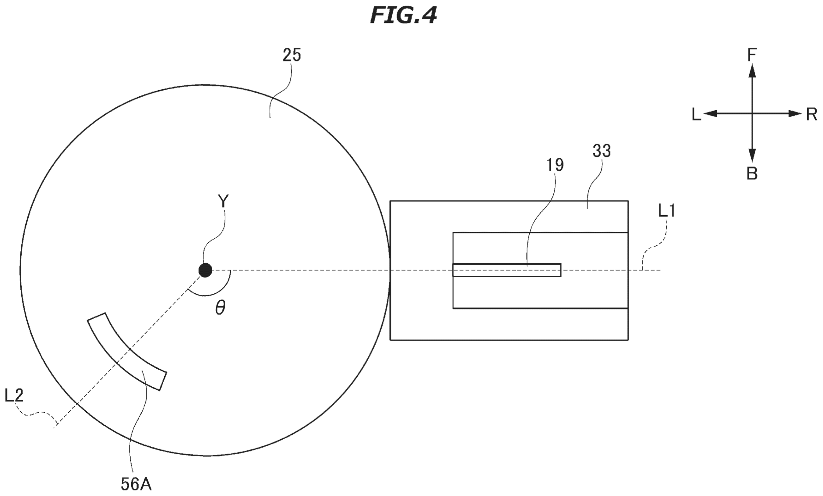

Fig. 4 is a schematic diagram illustrating a positional relationship between a contact region 56A of the contact portion 56 and the power supply terminal 19 of the electric valve 1' according to the second embodiment of the present disclosure. Fig. 4 illustrates the positional relationship between the contact region 56A of the contact portion 56 and the power supply terminal 19 when the electric valve 1' illustrated in Fig. 3 is viewed from above to the direction of the central axis Y. The contact region 56A represents a range in which the contact portion 56 and the stator yoke 13Y are in contact with each other. Note that the contact region 56A may be a surface region or a point region. Additionally, the contact region 56A may include a plurality of regions. In the example of Fig. 4, the contact region 56A is a single arcuate region.

As illustrated in Fig. 4, a virtual line perpendicular to the central axis Y and connecting the central axis Y and a center of the power supply terminal 19 is defined as a first virtual line L1. In addition, a virtual line perpendicular to the central axis Y and connecting the central axis Y and a center of the contact region 56A of the contact portion 56 is defined as a second virtual line L2. Additionally, an angle formed between the first virtual line L1 and the second virtual line L2 is defined as θ (0°≤θ <360°).

As illustrated in Fig. 4, θ may be 90° or more. By arranging the contact portion 56 and the power supply terminal 19 such that θ is 90° or more, the contact portion 56 and the power supply terminal 19 are positioned further apart from each other, when the electric valve 1' is viewed from above to the direction of the central axis Y, than in a case where θ is 90° or less. That is, the contact portion 56 and the power supply terminal 19 are spaced apart from each other in a direction perpendicular to the central axis Y. Accordingly, a water drop entering along the contact portion 56 can be suppressed from reaching the power supply terminal 19 due to capillary action. As a result, insulation performance of a connector portion 33 of the power supply terminal 19 can be improved.

### <Third and Fourth Embodiments>

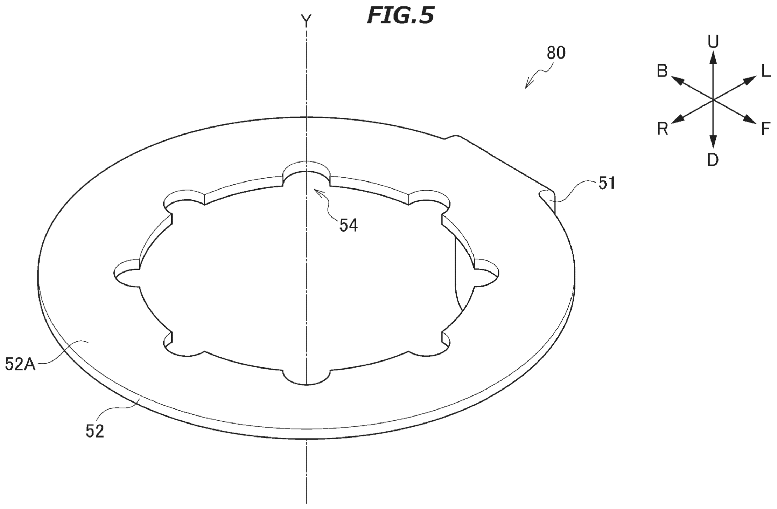

Fig. 5 is a cross-sectional view of an attachment part 80 according to a third embodiment of the present disclosure.

As illustrated in Fig. 5, the inner circumference of the base portion 52 is provided with a plurality of restricting portions 54 at approximately equal intervals in a circumferential direction. The restricting portions 54 have a notched shape recessed toward a radially outward direction. During molding of the outer mold portion 25, the second mold resin 25M enters the restricting portions 54, and the stator main body 10 and the attachment part 80 are integrated while the restricting portions 54 and the second mold resin 25M engage with each other. As a result, the restricting portions 54 restrict rotation of the stator unit 100 about the central axis Y with respect to the outer mold portion 25. Accordingly, the stator main body 10 and the attachment part 80 are fixed to each other in a rotational direction about the central axis Y.

In this manner, the attachment part 80 is provided with the restricting portions 54, and thus the fixing strength of the stator unit 100 in the rotational direction about the central axis Y can be improved.

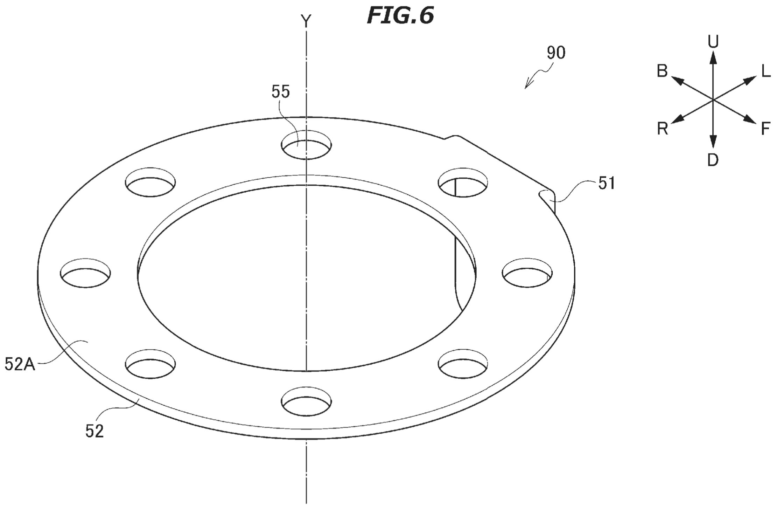

Fig. 6 is a cross-sectional view of an attachment part 90 according to a fourth embodiment of the present disclosure.

As illustrated in Fig. 6, an upper surface 52A of the base portion 52 is provided with a plurality of restricting portions 55 at approximately equal intervals in a circumferential direction. The restricting portions 55 have a cylindrical shape penetrating in an upper-lower direction. Similarly to the third embodiment, during molding of the outer mold portion 25, the second mold resin 25M enters the restricting portions 55, and the stator main body 10 and the attachment part 90 are integrated while the restricting portions 55 and the second mold resin 25M engage with each other. As a result, the restricting portions 55 restrict rotation of the stator unit 100 about the central axis Y with respect to the outer mold portion 25. Accordingly, the stator main body 10 and the attachment part 90 are fixed to each other in a rotational direction about the central axis Y.

In this manner, the attachment part 90 is provided with the restricting portions 55, and thus the fixing strength of the stator unit 100 in the rotational direction about the central axis Y can be improved.

### <Method for Manufacturing Stator Unit>

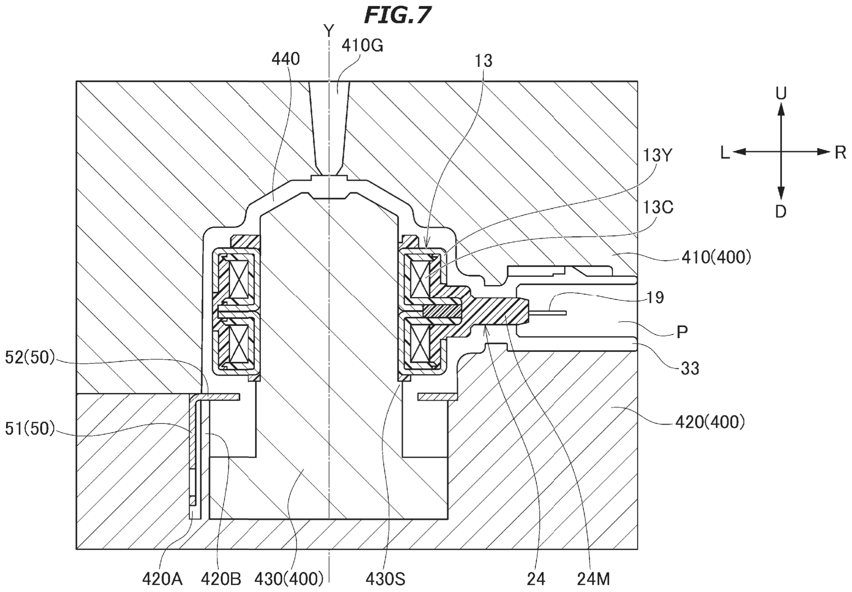

Next, a method for manufacturing the stator unit 100 according to the present embodiment will be described with reference to Fig. 7. Fig. 7 is a perspective view illustrating a state in which a stator unit before outer molding according to an embodiment of the present disclosure is mounted to a mold for molding.

First, in an inner molding step, the stator assembly 13 including the stator yokes 13Y and the stator coils 13C and the power supply terminal 19 are mounted to a mold for inner molding (not illustrated), and the first mold resin 24M is injected so as to cover an internal region of the stator assembly 13 and a portion of the power supply terminal 19, thereby performing molding (not illustrated). As a result, the inner mold portion 24 is formed.

Next, in an outer molding step after the inner molding step, as illustrated in Fig. 7, the inner mold portion 24 and the attachment part 50 are mounted to a mold for outer molding 400. The mold for outer molding 400 includes an upper mold 410, a lower mold 420, a core 430, and a slide pin P. The upper mold 410 includes a gate 410G, which is a resin injection port. The lower mold 420 includes a groove portion 420A for inserting the engaging portion 51 of the attachment part 50, and a support portion 420B for supporting a bottom surface of the base portion 52. The groove portion 420A and the support portion 420B are positioned adjacent to each other in a direction perpendicular to the central axis Y. The upper mold 410 and the lower mold 420 form a cavity 440 for forming a resin layer around the inner mold portion 24 and the attachment part 50. The core 430 secures a space for assembling, after the outer molding, the can 23 and the rotor 14 and the like arranged inside the can 23. Additionally, the core 430 has a substantially cylindrical shape and includes a step portion 430S for supporting the inner mold portion 24. The slide pin P is slid and mounted to the power supply terminal 19, thereby forming the connector portion 33 of the power supply terminal 19.

With the engaging portion 51 of the attachment part 50 fitted into the groove portion 420A, the bottom surface of the base portion 52 supported by the support portion 420B, and the inner mold portion 24 supported by the step portion 430S, the second mold resin 25M is injected into the cavity 440 from the gate 410G. As a result, the outer mold portion 25 covering the inner mold portion 24 and a portion of the attachment part 50 is formed, and at the same time, the stator main body 10 including the inner mold portion 24 and the outer mold portion 25 is formed, resulting in the formation of the stator unit 100 in which the base portion 52 and the stator main body 10 are integrated.

In this manner, the outer mold portion 25 is formed so as to cover the inner mold portion 24 and a portion of the attachment part 50, and thus the fixing strength of the attachment part 50 can be increased. Additionally, in the inner molding step, an injection pressure cannot be increased in order to protect the stator coil 13C arranged inside the stator assembly 13. However, in the outer molding step, the injection pressure can be increased as compared with the inner molding step because there is no need to protect electronic components such as the stator coil 13C. Accordingly, the fixing strength of the attachment part 50 can be increased.

Although the embodiments of the present disclosure have been described, it is to be understood that the technical scope of the present disclosure is not to be construed as limited by the descriptions of the present embodiments. It is understood by one skilled in the art that the present embodiments are just examples and the embodiments can be variously changed within the scope of the invention recited in the claims. The technical scope of the present disclosure should be determined based on the scope of the invention defined in the claims and the scope of its equivalents.

For example, the method for manufacturing a stator unit described above is a method for manufacturing the stator unit 100 according to the first embodiment illustrated in Fig. 1, but is also applicable as a method for manufacturing the stator unit 200 of the electric valve 1' according to the second embodiment illustrated in Fig. 3. In addition, instead of the attachment part 50 of the stator unit 100 according to the first embodiment illustrated in Fig. 1, the attachment part 80 according to the third embodiment illustrated in Fig. 5, or the attachment part 90 according to the fourth embodiment illustrated in Fig. 6 may be used. By using the attachment part 80 according to the third embodiment, in the outer molding step, the second mold resin 25M injected from the gate 410G passes through the restricting portions 54 having a notched shape and enters a lower portion of the attachment part 80, thereby allowing the resin to be uniformly filled throughout. A similar effect is also achieved when the attachment part 90 according to the fourth embodiment is used.

In addition, the attachment part 70 of the stator unit 200 of the electric valve 1' according to the second embodiment is provided with one contact portion 56, but the number is not limited thereto. Similarly, the attachment part 80 according to the third embodiment and the attachment part 90 according to the fourth embodiment each have eight restricting portions 54, 55, but the number is not limited thereto. Similarly, the attachment part 50 of the stator unit 100 according to the first embodiment, the attachment part 70 of the stator unit 200 according to the second embodiment, the attachment part 80 according to the third embodiment, and the attachment part 90 according to the fourth embodiment each have one set of engaging portions 51, but the number is not limited thereto.

In addition, the base portion 52 of the attachment parts 50, 70, 80, and 90 according to the embodiments of the present disclosure may have a C-shape in which a portion of the ring shape is missing.

In addition, the valve main body 60 (main body block) according to the embodiments of the present disclosure has a configuration in which a block including the valve chamber 62 and a block including the inlet passage 63 and the outlet passage 64 are integrated, but the block including the valve chamber 62 and the block including the inlet passage 63 and the outlet passage 64 may be configured as separate bodies.

In addition, the electric valves 1 and 1' according to the embodiments of the present disclosure are electric valves using a reduction mechanism, but may be direct-acting electric valves without using a reduction mechanism.

In addition, the present invention is applicable to an electric valve having a configuration in which the stator main body 10 is mounted to the can 23.

### REFERENCE SIGNS LIST

1, 1': electric valve
10: stator main body
12: motor
13: stator assembly
13Y: stator yoke
13C: stator coil
14: rotor
15: valve shaft
16: support member
17: rotor support portion
18: planetary gear mechanism
19: power supply terminal
20: screw driving member
21: transmission mechanism
22: valve body
23: can
24: inner mold portion
24M: first mold resin
25: outer mold portion
25A: bottom surface
25M: second mold resin
31: ball-shaped joint
32: spring receiving member
33: connector portion
50, 70, 80, 90: attachment part
51: engaging portion
52: base portion
52A: upper surface
54, 55: restricting portion
56: contact portion
56A contact region
60: valve main body
61: engaged portion
62: valve chamber
63: inlet passage
64: outlet passage
65: valve seat
100, 200: stator unit
400: mold for outer molding
410: upper mold
410G: gate
420: lower mold
420A: groove portion
420B: support portion
430: core
430S: step portion
440: cavity
P: slide pin

## Claims

1. A stator unit including a stator main body and an attachment part configured to attach the stator main body to an electric valve main body,
wherein the stator main body comprises:
an inner mold portion including a stator assembly having a stator yoke and a stator coil; and
an outer mold portion covering the inner mold portion, and
wherein the outer mold portion covers a portion of the attachment part.

2. The stator unit according to claim 1,
wherein the attachment part is electrically conductive, and
wherein the attachment part includes a contact portion in contact with the stator yoke.

3. The stator unit according to claim 2,
wherein the inner mold portion includes a power supply terminal configured to supply power to the stator coil,
wherein when viewed from a direction of a central axis of the stator main body having a cylindrical shape, a virtual line perpendicular to the central axis and connecting the central axis and a center of the power supply terminal is defined as a first virtual line, and a virtual line perpendicular to the central axis and connecting the central axis and a center of a contact region of the contact portion is defined as a second virtual line, and
wherein when viewed from the direction of the central axis of the stator main body, an angle θ formed between the first virtual line and the second virtual line is 90° or more.

4. The stator unit according to claim 1,
wherein the attachment part includes a base portion having a ring shape, and
wherein the base portion includes a restricting portion configured to restrict rotation of the stator main body about a central axis with respect to the outer mold portion.

5. The stator unit according to claim 4,
wherein the restricting portion has a notched shape or a cylindrical shape.

6. A method for manufacturing a stator unit including a stator main body having a stator assembly including a stator yoke and a stator coil, and an attachment part configured to attach the stator main body to an electric valve main body, the method comprising:
an inner molding step of molding an internal region of the stator assembly, thereby forming an inner mold portion including the stator assembly; and
an outer molding step of, after the inner molding step, performing molding so as to cover the inner mold portion and a portion of the attachment part, thereby forming an outer mold portion,
wherein the stator main body including the inner mold portion and the outer mold portion is formed by the outer molding step.

7. An electric valve including a stator main body, an electric valve main body, and an attachment part configured to attach the stator main body to the electric valve main body,
wherein the stator main body comprises:
an inner mold portion including a stator assembly having a stator yoke and a stator coil; and
an outer mold portion covering the inner mold portion and at least a portion of the attachment part,
wherein the electric valve main body includes an engaged portion, and
wherein the attachment part includes an engaging portion configured to engage with the engaged portion.
